# EUROPÄISCHE PATENTSCHRIFT

(11) **EP 2 678 200 B1**
(45) Veröffentlichungstag und Bekanntmachung des Hinweises auf die Patenterteilung: **17.07.2019**
(21) Anmeldenummer: 12706011.9
(22) Anmeldetag: 16.02.2012
(51) Int. Cl.: B60S 1/38

(54) **WISCHBLATT ZUM REINIGEN VON SCHEIBEN, INSBESONDERE VON KRAFTFAHRZEUGEN**
WIPER BLADE FOR CLEANING PANES, IN PARTICULAR OF MOTOR VEHICLES
BALAI D'ESSUIE-GLACE POUR NETTOYER DES VITRES, NOTAMMENT DE VÉHICULES À MOTEUR

(30) Priorität: 24.02.2011 DE 102011004637
(43) Veröffentlichungstag der Anmeldung: 01.01.2014
(73) Patentinhaber: Robert Bosch GmbH, 70442 Stuttgart (DE)
(72) Erfinder: VANDERHEYDEN, Gert, B-3150 Tildonk (BE)
(86) Internationale Anmeldenummer: PCT/EP2012/052700
(87) Internationale Veröffentlichungsnummer: WO 2012/113708

(56) Entgegenhaltungen:
- EP-A1- 1 745 997
- EP-A1- 2 177 407
- EP-B1- 0 914 269
- US-A1- 2006 107 485

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärische gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung. Am Tragelement ist eine Anschlussvorrichtung befestigt, über die die Verbindung zum Wischerarm hergestellt wird.

Aus der EP 0914269 B1 ist es bekannt, die Anschlussvorrichtung mittels einer Schweißverbindung am Tragelement zu befestigen. Dazu wird das entweder aus Metall oder einem Kunststoff bestehende wischblattseitige Verbindungselement auf das Tragelement aufgebracht oder aufgeschoben und mittels einer Widerstandsschweißung im Falle eines metallenen Verbindungselements oder mittels einer Ultraschallschweißung im Falle eines Kunststoff-Verbindungselements stoffschlüssig mit dem Tragelement verbunden. Diese Schweißverbindung ist im Alltag extremen Bedingungen ausgesetzt und muss hohen Drehmomenten und Vibrationen auch bei unterschiedlichen Witterungsbedingungen standhalten Insbesondere bei den in großen Stückzahlen hergestellten Wischblättern stellt eine Schweißverbindung hohe Qualitätsanforderungen an die Prozessführung und verteuert damit das Wischblatt, was gerade bei Massenprodukten zu vermeiden ist. Weiterer Stand der Technik ist aus der EP 1 745 997 A1 und aus der EP 2 177 407 A1 bekannt.

Das erfindungsgemäße Wischblatt mit den Merkmalen des Hauptanspruchs hat den Vorteil, dass durch die Aufweitung der lichten Weiten in Richtung des Spalts eine einfache Montage ermöglicht wird. Die Federschienen lassen sich prozesssicher und kostengünstig mit den wischblattseitigen Teilen der Anschlussvorrichtung verbinden.

Durch eine einseitige Schräge oder einen baldigen Verlauf zumindest an einer Seite der lichten Weiten zentrieren sich die Federschienen beim Einschieben in die lichten Weiten von selbst. Darüber hinaus lässt sich das wischblattseitige Teil problemlos als Spritzgussteil herstellen.

Ist die Schräge oder der ballige Verlauf auf einer konkaven Seite der Federschienen angeordnet, während die auf der konvexen Seite der Federschienen angeordneten Innenflächen der lichten Weiten miteinander fluchten, ist gewährleistet, dass nach der Montage und beim späteren Benutzen des Wischblatts die vom Wischerarm auf die Anschlussvorrichtung ausgeübte Anpresskraft flächig auf die Federschienen übertragen werden kann. Dadurch können die Verbindung belastende Momente vermieden werden.

Ein sicherer und fester Klemmenverbund ergibt sich, wenn die Größe der lichten Weiten in denen dem Spalt gegenüberliegenden Nutgründen gleichgroß oder etwas kleiner sind als die Dicke der Federschienen. Auf diese Weise ist gewährleistet, dass die Federschienen fest in den lichten Weiten eingeklemmt sind.

Die Anschlussvorrichtung lässt sich einfach auf die Federschienen aufschieben, wenn die Aufnahmen mit Anlaufschrägen versehen sind.

Durch das erfindungsgemäße Verfahren zum Herstellern eines Wischblatts, nach dem die Federschienen einzelnen oder zusammen in die Aufnahmen eingeschoben werden und nach erreichen der vorbestimmten Längsposition des wischblattseitigen Teils der Anschlussvorrichtung die Federschienen unter Erzeugung des Spalts in die Nutgründe der lichten Weiten eingedrückt werden, wird ein sehr einfaches und prozesssicheres Verfahren bereitgestellt, bei dem Schweißverbindungen effektiv vermieden werden.

### Zeichnung

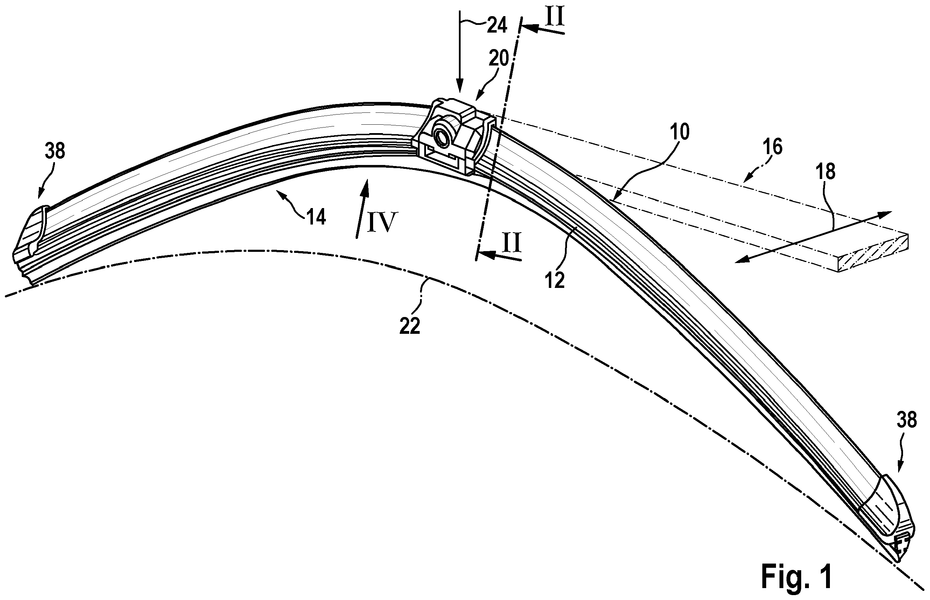

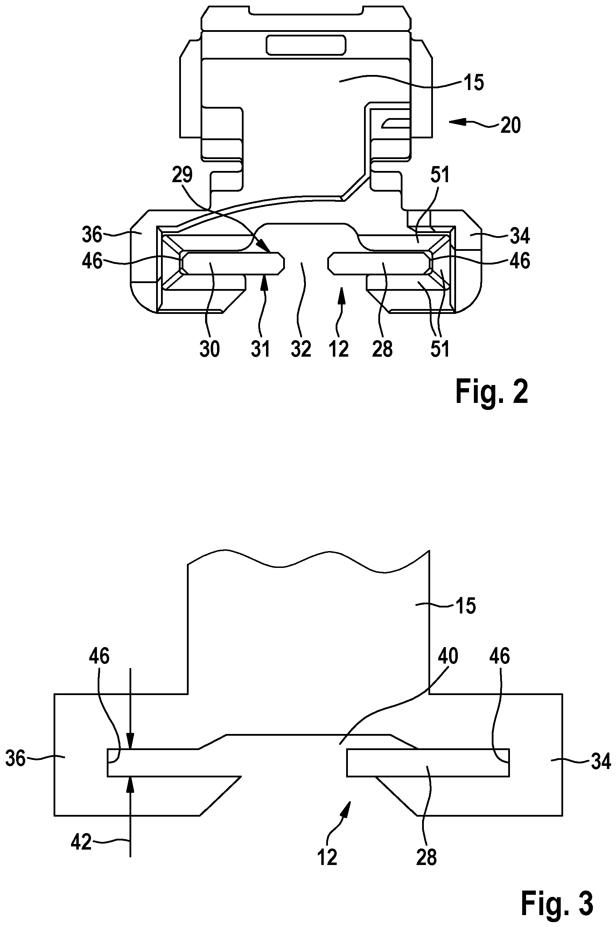

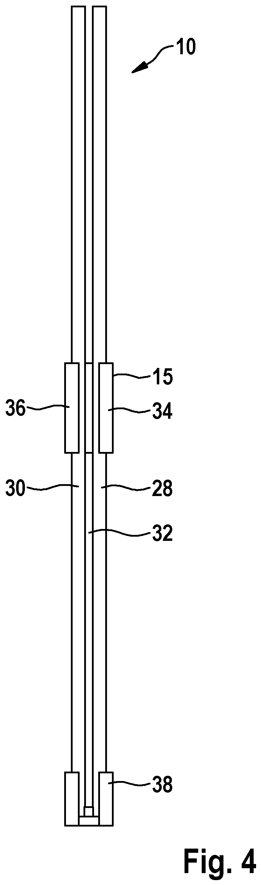

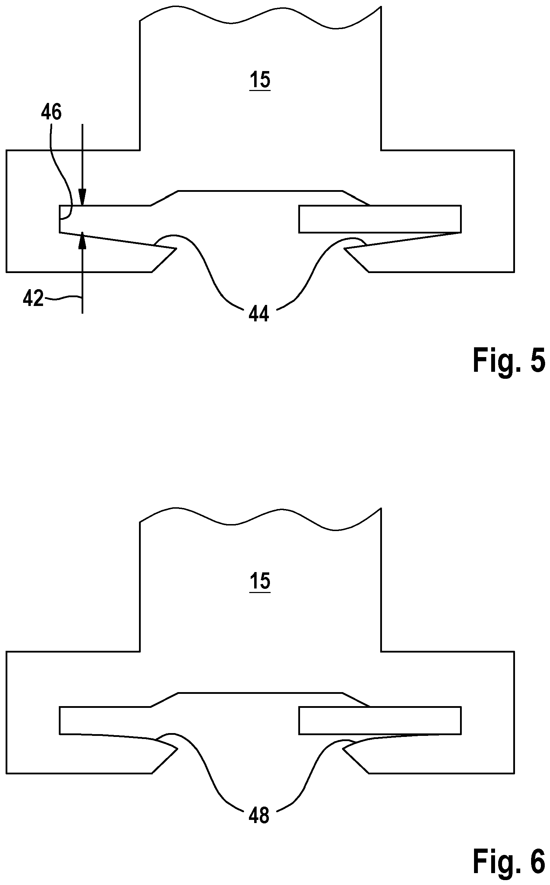

In der Zeichnung zeigen: Figur 1 ein erfindungsgemäßes Wischblatt in perspektivischer Darstellung mit strichpunktiert angedeutetem Wischerarm und strichpunktiert angedeuteter Oberfläche einer Windschutzscheibe, Fig. 2 zeigt eine Ansicht nach II-II in Fig. 1, Fig. 3 eine schematische Darstellung der Ansicht nach Fig. 2 mit nur einer Federschiene, Fig. 4 eine schematische Ansicht in Blickrichtung IV in Fig. 1 mit nur einer Endkappe und die Figuren 5 bis 8 Ausführungsbeispiele von wischblattseitigen Teilen der Anschlussvorrichtung mit unterschiedlicher Ausbildung der lichten Weiten.

### Beschreibung der Ausführungsbeispiele

Ein in Figur 1 gezeigtes Wischblatt 10 weist ein bandartig langgestrecktes, federelastisches Tragelement 12 auf (Figuren 1 und 2), an dessen unteren, der Scheibe zugewandten Bandseite 13 eine langgestreckte, gummielastische Wischleiste 14 längsachsenparallel befestigt ist. An der oberen, von der Scheibe abgewandten Bandseite 11 des auch als Federschiene zu bezeichnenden Tragelements 12 ist in dessen Mittelabschnitt das wischblattseitige Teil 15 einer Anschlussvorrichtung angeordnet, mit deren Hilfe das Wischblatt 10 gelenkig mit einem in Figur 1 strichpunktiert angedeuteten Wischerarm 16 lösbar verbunden werden kann. Der in Richtung eines Doppelpfeils 18 in Figur 1 pendelnd angetriebenen Wischerarm 16 ist in Richtung eines Pfeils 24 zur zu wischenden Scheibe - beispielsweise zur Windschutzscheibe eines Kraftfahrzeugs belastet - deren Oberfläche in Figur 1 durch eine strichpunktierte Linie 22 angedeutet ist. Da die Linie 22 die stärkste Krümmung der Scheibenoberfläche darstellen soll ist klar ersichtlich, dass die Krümmung des mit seinen beiden Enden an der Scheibe anliegenden, noch unbelasteten Wischblatts stärker ist als die maximale Scheibenkrümmung (Figur 1). Unter dem Anpressdruck (Pfeil 24) legt sich das Wischblatt 10 mit seiner Wischlippe 26 über seine gesamte Länge an der Scheibenoberfläche 22 an. Dabei baut sich im aus Metall gefertigten, federelastischen Tragelement 12 eine Spannung auf, welche für eine ordnungsgemäße Anlage der Wischleiste 14 beziehungsweise der Wischlippe 26 über deren gesamte Länge an der Scheibenoberfläche 22 sowie für eine gleichmäßige Verteilung des Anpressdrucks (Pfeil 24) sorgt.

Im Folgenden soll nun auf die besondere Ausgestaltung des erfindungsgemäßen Wischblatts näher eingegangen werden.

In Fig. 2 ist erkennbar, dass das Tragelement 12 aus zwei, voneinander getrennten Federschienen 28 und 30 aufgebaut ist, die zueinander beabstandet sind und einen Spalt 32 begründen. Die Anschlussvorrichtung 15 weist in einem unteren Bereich zwei u-förmige Aufnahmen 34 und 36 auf, in denen die Federschienen 28 und 30 aufgenommen sind. Die Aufnahmen 34 und 36 umfassen die Federschienen 28 und 30 jeweils über einen größeren Teil ihres Querschnitt, wobei der mit dem Wischerarm 16 korrespondierende Teil der Anschlussvorrichtung 15 auf der konvexen Seite 29 des Tragelements 12 angeordnet ist, während die konkave Seite 31 dieser gegenüberliegt.

In Fig. 3 ist die Anschlussvorrichtung 15 schematisch dargestellt, wobei in der Aufnahme 34 die entsprechende Federschiene 28 eingezeichnet ist, während die Federschiene 30, nicht in der entsprechenden Aufnahme 36 liegt. Es ist erkennbar, dass die Aufnahmen 34 und 36 die Federschienen 28 und 30 passend umgreifen. Im Bereich oberhalb der Federschienen 28 und 30 sowie oberhalb des Spalts 32 weist die Anschlussvorrichtung 15 eine Aussparung 40 auf, in die, wenn das Wischblatt 10 zusammengebaut ist, ein Kopfteil einer Wischleiste zu liegen kommt.

Das in Fig. 4 von unten dargestellte Wischblatt 10, das ohne die Wischleiste 14 bzw. Wischerlippe 26 gezeichnet ist, zeigt die Federschienen 28 und 30, den Spalt 32 sowie die Aufnahmen 34 und 36 der Anschlussvorrichtung 15. Es ist erkennbar, dass bei dieser Ausführungsform des Wischblatts 10 die Federschienen 28 und 30 vollständig voneinander getrennt sind und lediglich durch die Anschlussvorrichtung 15 bzw. über Endkappen 38, von denen in Fig. 4 nur eine an einem Ende gezeichnet ist, zusammengehalten werden.

In Fig. 5 ist ein wischblattseitiges Teil 15 einer Anschlussvorrichtung 20 analog zu Fig. 3 dargestellt. Es ist zu erkennen, dass die Aufnahmen 34, 36 eine Schräge 44 aufweisen. Die Schräge erweitern die lichten Weiten 42 von einem Nutgrund 46 in Richtung auf den Spalt 32 zwischen den Federschienen 28, 30 zu. Werden die Federschienen 28, 30 in die lichte Weite 42 eingeschoben, so können Sie entlang der Schräge 44 bis zu den Nutgründen 46 gleiten.

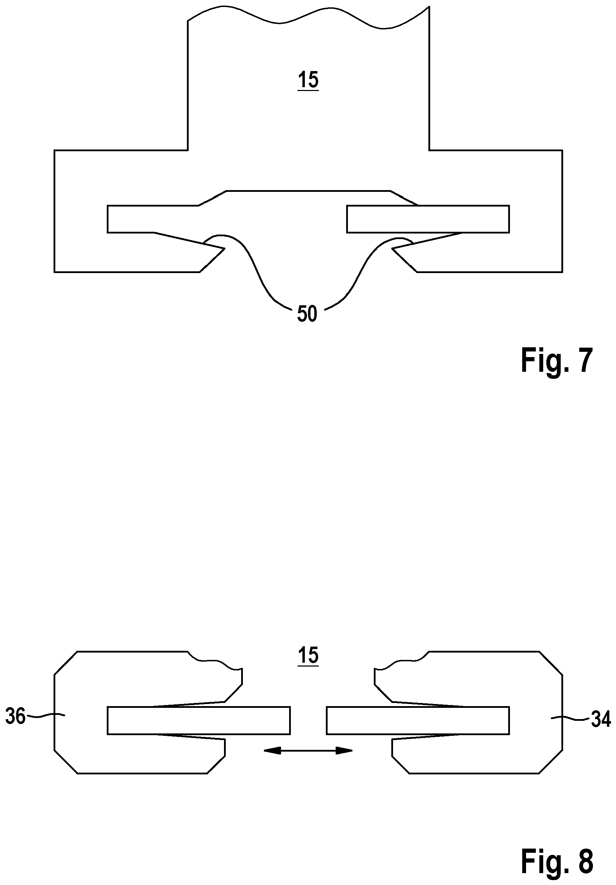

In Fig. 6 ist die Schräge 48 analog zur Schräge 44 der Fig. 5 angeordnet. Die Schräge 48 ist jedoch ballig ausgebildet. Im Bereich des Nutgrunds 46 werden die Federschienen 28, 30 über einen größeren Bereich geklemmt, trotzdem ermöglicht die Öffnung beim Einschieben der Federschienen 28, 30 in die lichte Weite 42 ein einfaches zentrieren. Dasselbe wird durch die stufenförmige Schräge 50 nach der Fig. 7 ermöglicht.

Die Ausführungsbeispielen nach den Figuren 5 bis 7 ist gemeinsam, dass die auf der Oberseite der Federschienen 28, 30, also der konvexen Seite der gebogenen Federschienen 28, 30, anliegenden Seiten des wischblattseitigen Teils 15 miteinander fluchten. In diesem Bereich ist somit keine Schräge angeordnet. Das wischblattseitige Teil 15 kann auf diese Weise flächig die vom Wischerarm 16 aufgebracht die Anpresskraft auf die Federschienen 28, 30 übertragen. In der in Fig. 8 gezeigten Variante sind auch in diesem Bereich Schräge in 52 angeordnet.

Es ist ersichtlich, dass die lichte Weite 42 im Bereich der Nutgründe 46 ungefähr der Dicke der Federschienen 28, 30 entsprechen muss oder eher etwas kleiner ist. Auf diese Weise kann ein Klemmenverbund erzielt werden. Die Schrägen 44, 48, 50 begründen einen Öffnungswinkel zwischen 1° und 15° bzw. sind an ihrer aufgeweiteten Seite 0,5 mm bis 1,5 mm größer als im Bereich des Nutgrunds 46.

Das wischblattseitige Teil 15 weist an seinen Außenseiten Anlaufschrägen 51 auf, die es ermöglichen, das wischblattseitige Teil einfach auf die Federschienen 28, 30 aufzuschieben.

Im erfindungsgemäßen Verfahren zum Herstellen eines Wischblatts 10 werden die Federschienen 28, 30 zusammen in die Aufnahmen 34, 36 eingeschoben bzw. die Anschlussvorrichtung auf die Federschienen aufgeschoben, wobei die Federschienen 28, 30 mehr oder weniger spaltlos aneinander anliegen. Erst wenn die längst Position der Anschlussvorrichtung 20 relativ zu den Federschienen 28, 30 erreicht ist werden die Federschienen 28, 30 in die lichten Weiten 42 der Aufnahmen 34, 36 vollends eingeschoben, wodurch der Spalt 32 gebildet wird.

Weisen die lichten Weiten 42 zumindest eine schräge Seite auf vereinfacht dies den Schiebevorgang erheblich. Anlaufschrägen 51 vereinfachen das Einfädeln der Federschienen 28, 30 in das wischblattseitige Teil 15.

## Patentansprüche

1. Wischblatt zum Wischen von Scheiben, insbesondere von Kraftfahrzeugscheiben, mit einem Tragelement (12) zum Aufnehmen einer Wischleiste (14), das zwei zueinander, über einen Spalt (32) getrennte Federschienen (28, 30) aufweist, an denen eine Anschlussvorrichtung (20) befestigt ist, die ein wischblattseitiges Teil (15) mit krallenartigen Aufnahmen (34, 36) aufweist, die das Tragelement (12) zumindest bereichsweise umgreifen, **dadurch gekennzeichnet, dass** die Aufnahmen (34, 36) eine Schräge (44) aufweisen, die lichte Weiten (42) von einem Nutgrund (46) in Richtung auf den Spalt (32) erweitern und einen Öffnungswinkel zwischen 1° und 15° begründen, oder an ihrer aufgeweiteten Seite 0,5 mm bis 1,5 mm größer sind als im Bereich des Nutgrundes (46).

2. Wischblatt nach Anspruch 1, **dadurch gekennzeichnet, dass** die Schräge (44) auf einer konkaven Seite der Federschienen (28, 30) liegt, während auf einer konvexen Seite der Federschienen (28, 30) die einander zuweisenden Innenflächen der lichten Weiten (42) miteinander fluchten.

3. Wischblatt nach einem der vorhergehenden Ansprüche, **dadurch gekennzeichnet, dass** die Größe der lichten Weiten (42) in dem Spalt (32) gegenüberliegenden Nutgründen gleich groß oder etwas kleiner sind als die Dicke der Federschienen (28, 30), so dass die eingeschobenen Federschienen (28, 30) festgeklemmt sind.

4. Wischblatt nach einem der vorhergehenden Ansprüche, **dadurch gekennzeichnet, dass** die Aufnahmen (34, 36) Anlaufschrägen aufweisen.

5. Verfahren zum Herstellen eines Wischblatts nach einem der vorhergehenden Ansprüche, **dadurch gekennzeichnet, dass** die Federschienen (28, 30) einzeln oder zusammen in die Aufnahmen (34, 36) eingeschoben werden und dass nach Erreichen der vorbestimmten Längsposition des wischblattseitigen Teils (15) der Anschlussvorrichtung (20) die Federschienen (28,30) unter Erzeugung des Spalts (32) in die Nutgründe der lichten Weiten (42) eingedrückt werden.

## Claims

1. Wiper blade for wiping windows, in particular motor vehicle windows, comprising a supporting element (12) for receiving a wiper strip (14), which supporting element has two spring rails (28, 30) which are separated from one another via a gap (32) and to which a connection device (20) is fastened, which connection device has a wiper blade-side part (15) with claw-like receptacles (34, 36) which engage around the supporting element (12) at least in certain regions, **characterized in that** the receptacles (34, 36) have a bevel (44), widen the clear widths (42) from a groove base (46) in the direction of the gap (32) and form the basis of an opening angle between 1° and 15° or are 0.5 mm to 1.5 mm larger at their expanded side than in the region of the groove base (46).

2. Wiper blade according to claim 1, **characterized in that** the bevel is situated on a concave side of the spring rails (28, 30), whereas the mutually facing inner surfaces of the clear widths (42) are aligned with one another on a convex side of the spring rails (28, 30).

3. Wiper blade according to one of the preceding claims, **characterized in that** the size of the clear widths (42) in the groove bases opposite the gap (32) are the same size or somewhat smaller than the thickness of the spring rails (28, 30), with the result that the inserted spring rails (28, 30) are firmly clamped.

4. Wiper blade according to one of the preceding claims, **characterized in that** the receptacles (34, 36) have run-on bevels.

5. Method for producing a wiper blade according to one of the preceding claims, **characterized in that** the spring rails (28, 30) are inserted individually or together into the receptacles (34, 36) and **in that**, after reaching the predetermined longitudinal position of the wiper blade-side part (15) of the connection device (20), the spring rails (28, 30) are pressed into the groove bases of the clear widths (42) to create the gap (32).

## Revendications

1. Balai d'essuie-glace pour essayer des vitres, en particulier des vitres de véhicules automobiles, comprenant un élément de support (12) pour recevoir une raclette de balai d'essuie-glace (14) qui présente deux rails élastiques (28, 30) séparés l'un de l'autre par une fente (32), sur lesquels est fixé un dispositif de raccordement (20) qui présente une partie du côté du balai d'essuie-glace (15) avec des logements de type griffe (34, 36) qui viennent en prise au moins en partie autour de l'élément de support (12), **caractérisé en ce que** les logements (34, 36) présentent un biseau (44), élargissent les dimensions intérieures (42) depuis une base de rainure (46) dans la direction de la fente (32) et établissent un angle d'ouverture compris entre 1° et 15°, ou sont plus grands de 0,5 mm à 1,5 mm au niveau de leur côté élargi que dans la région du fond de rainure (46).

2. Balai d'essuie-glace selon la revendication 1, **caractérisé en ce que** le biseau (44) est situé sur un côté concave des rails élastiques (28, 30), tandis que sur un côté convexe des rails élastiques (28, 30), les surfaces intérieures tournées l'une vers l'autre des dimensions intérieures (42) sont en affleurement l'une avec l'autre.

3. Balai d'essuie-glace selon l'une quelconque des revendications précédentes, **caractérisé en ce que** la taille des dimensions intérieures (42) dans les fonds de rainure opposés à la fente (32) est identique ou un peu plus petite que l'épaisseur des rails élastiques (28, 30), de telle sorte que les rails élastiques enfoncés (28, 30) sont serrés fermement.

4. Balai d'essuie-glace selon l'une quelconque des revendications précédentes, **caractérisé en ce que** les logements (34, 36) présentent des biseaux de montée.

5. Procédé de fabrication d'un balai d'essuie-glace selon l'une quelconque des revendications précédentes, **caractérisé en ce que** les rails élastiques (28, 30) sont enfoncés individuellement ou ensemble dans les logements (34, 36) et **en ce qu'**après avoir atteint la position longitudinale prédéterminée de la partie du côté du balai d'essuie-glace (15) du dispositif de raccordement (20), les rails élastiques (28, 30) sont pressés en formant la fente (32) dans les fonds de rainure des dimensions intérieures (42).
